(19) Europäisches Patentamt
European Patent Office
Office européen des brevets

(11) **EP 1 603 686 B1**

(12) **FASCICULE DE BREVET EUROPEEN**

(45) Date de publication et mention
de la délivrance du brevet:
**13.05.2009 Bulletin 2009/20**

(51) Int Cl.:
***B06B 1/16*** *(2006.01)* ***B64C 27/00*** *(2006.01)*

(21) Numéro de dépôt: **04715923.1**

(86) Numéro de dépôt international:
**PCT/FR2004/000477**

(22) Date de dépôt: **01.03.2004**

(87) Numéro de publication internationale:
**WO 2004/087343 (14.10.2004 Gazette 2004/42)**

(54) **DISPOSITIF ANTIVIBRATOIRE A MASSELOTTES ROTATIVES**

SCHWINGUNGSDÄMPFENDE VORRICHTUNG MIT ROTIERENDEN UNWUCHTEN

ANTI-VIBRATORY DEVICE WITH ROTARY COMPENSATION WEIGHTS

(84) Etats contractants désignés:
**FR GB IT**

(30) Priorité: **20.03.2003 FR 0303412**

(43) Date de publication de la demande:
**14.12.2005 Bulletin 2005/50**

(73) Titulaire: **EUROCOPTER**
**13725 Marignane Cédex (FR)**

(72) Inventeurs:
• **MANFREDOTTI, Thomas**
  **F-06480 La Colle sur Loup (FR)**

• **SEQUERA, Damien**
  **F-30900 Nîmes (FR)**

(74) Mandataire: **Pouillot, Laurent Pierre Paul et al**
**GPI & Associés**
**EuroParc de Pichaury - Bât D1**
**1330, rue Guillibert de la Lauzière**
**13856 Aix en Provence Cedex 3 (FR)**

(56) Documents cités:
**EP-A- 0 400 510** **WO-A-96/06290**
**US-A- 5 903 077**

**EP 1 603 686 B1**

## Description

La présente invention concerne un dispositif antivibratoire.

Plus particulièrement, quoique non exclusivement, le dispositif selon l'invention est destiné à être monté, dans son application préférentielle, à bord d'aéronefs, notamment dans la cabine d'un aéronef à voilure tournante comme l'hélicoptère, mais il pourrait bien entendu être utilisé pour toute autre application dès l'instant où l'on souhaite réduire, voire supprimer, des vibrations engendrées par un corps en mouvement.

Le problème du contrôle des vibrations dans une cabine d'hélicoptère est décrit en détail dans le préambule du brevet FR-2 770 825 (US-6067 853). En résumé, les principales vibrations existantes sont dues à la rotation du rotor principal de sustentation et d'avance et à l'écoulement de la veine d'air le long du fuselage de l'hélicoptère.

Pour tenter d'absorber ces vibrations apparaissant dans la cabine, on a proposé des dispositifs antivibratoires à résonateur qui agissent par résonance à une fréquence prédéterminée pour réduire les vibrations présentant cette fréquence. Leur efficacité est malgré tout limitée puisqu'ils n'agissent que sur des vibrations ayant la fréquence prédéterminée et non sur les autres vibrations.

De plus, ce type de dispositifs devient inefficace lorsque les vibrations à réduire changent de fréquences.

Le dispositif antivibratoire du type à résonateur commandable décrit dans ce brevet antérieur permet de traiter des vibrations à fréquences variables. Pour cela, le résonateur est utilisé comme actionneur dans un système à boucle fermée et les mesures vibratoires issues de capteurs placés sur l'hélicoptère sont analysées par une unité de commande qui délivre le signal de commande pour chaque actionneur, de façon à minimiser les niveaux vibratoires aux points de mesure. Bien que donnant des résultats intéressants, ce dispositif antivibratoire présente un certain nombre d'inconvénients tels qu'une masse élevée (une dizaine de kilogrammes pour chaque résonateur), ce qui est toujours pénalisant dans le domaine aéronautique, et une consommation d'énergie importante pour traiter efficacement les niveaux vibratoires rencontrés sur les hélicoptères.

Pour remédier à ces inconvénients, des dispositifs antivibratoires d'une autre conception ont été développés et font appel à l'utilisation de balourd tournant pour créer un effort contrecarrant les vibrations à réduire. Les brevets américain US-5 903 077 et européen EP-O 337 040 enseignent de tels dispositifs.

Le dispositif antivibratoire ou générateur de force vibratoire modulaire décrit dans ce brevet américain se compose de modules ou ensembles comportant chacun un moteur, entraînant par engrenage une paire de rotors dentés coopérants à masses excentrées respectives, de sorte que le centre de gravité de chacun d'eux n'est pas situé sur son axe de rotation. Ainsi, la rotation de chaque rotor produit un balourd tournant et, comme ils sont disposés dans le même plan, ils produisent des balourds identiques mais tournant en sens inverses. Il en résulte un effort sinusoïdal dans la direction perpendiculaire au plan contenant les axes de rotation des rotors, car les composantes des balourds dans ce plan sont opposées et de ce fait s'annulent.

En général, le générateur comprend deux modules identiques associés pour obtenir un effort résultant réglable dont l'amplitude dépend du déphasage entre les modules et dont la fréquence est égale au régime de rotation des rotors.

Une unité de commande pilote et régule le déphasage entre les modules et le régime de rotation des rotors, de sorte que les vibrations de fréquence quelconque peuvent être réduites.

Le dispositif antivibratoire décrit dans le brevet européen ci-dessus mentionné comprend de façon analogue deux ensembles identiques de deux rotors chacun, à masselottes excentrées respectives, les deux ensembles étant disposés symétriquement par rapport à un axe de symétrie et lesdits rotors à masselottes excentrées, à axes parallèles entre eux et orthogonaux à l'axe de symétrie, sont entraînés en rotation par des moteurs respectifs qui sont asservis pour tourner à la même vitesse. Un tel dispositif peut ainsi s'adapter aux fluctuations en amplitude, en phase et en fréquence des vibrations que l'on souhaite atténuer.

Bien que ces dispositifs antivibratoires à balourd tournant apportent un progrès potable dans le traitement des vibrations, ils présentent néanmoins des inconvénients, en particulier :

- une augmentation du niveau vibratoire (au lieu d'une diminution) en cas de panne. En effet, si pour une cause quelconque les moteurs des deux modules ne tournent plus à la même vitesse, l'effort vibratoire résultant n'est plus contrôlé, ce qui entraîne immédiatement une forte dégradation du confort, qui devient sensiblement plus mauvais qu'en l'absence de traitement ;

- une unité de contrôle assez complexe car elle doit assurer la synchronisation des modules pendant la phase de montée en régime du moteur, ce qui complique les algorithmes de contrôle et augmente d'autant le risque de panne, et ;

- un coût relativement élevé en raison du nombre de composants "nobles" : plusieurs moteurs, jeux d'engrenages et unité de contrôle complexe puisqu'elle doit synchroniser les vitesses des moteurs et asservir leur déphasage pour réaliser un système actif.

La présente invention a pour but de remédier à ces inconvénients.

A cet effet, le dispositif antivibratoire du type comportant au moins deux ensembles de deux rotors identiques chacun, à masselottes excentrées respectives, lesdits ensembles étant disposés symétriquement par rapport à un axe de symétrie et les axes de rotation desdits rotors étant parallèles entre eux et orthogonaux audit axe de symétrie, un système d'entraînement en rotation desdits rotors, est remarquable, selon l'invention :

- en ce qu'il comprend un équipement mobile commandable portant ledit système d'entraînement et pouvant coulisser le long dudit axe de symétrie pour entraîner le déphasage des rotors à masselottes excentrées des ensembles ; et

- en ce que ledit système d'entraînement comporte un moteur unique pour la rotation desdits rotors, à axe agencé perpendiculairement audit axe de symétrie, qui entraîne un lien sans fin passant autour desdits rotors, de sorte que les longueurs des brins du lien passant dans lesdits ensembles sont égales.

Ainsi, grâce à l'invention, un effort vibratoire stable d'amplitude et d'orientation déterminées peut être engendré par le dispositif en déplaçant simplement le long de l'axe de symétrie l'équipement mobile portant le moteur unique et qui entraîne, via ledit lien, le déphasage progressif des rotors de chaque ensemble pour amener les masselottes excentrées jusqu'à la position souhaitée. En effet, quand le moteur unique tourne et que l'équipement mobile est fixe, les deux brins symétriques passant dans les ensembles ont des vitesses de déplacement identiques et de même module mais de sens différents puisque, par symétrie, l'un des brins traversant son ensemble s'éloigne du moteur unique, tandis que l'autre brin se rapproche de celui-ci. Il en résulte que, quand l'équipement mobile auquel est lié ledit moteur unique se déplace à une vitesse donnée, il impose son mouvement aux deux brins, et à la vitesse de déplacement de l'un des brins s'ajoute la vitesse de déplacement de l'équipement mobile, et, à la vitesse de déplacement de l'autre brin se retranche la vitesse dudit équipement. De la sorte, pendant le déplacement de l'équipement mobile, les deux rotors d'un même ensemble sont animés d'une vitesse différente de celle des rotors de l'autre ensemble, ce qui entraîne le déphasage progressif des masselottes excentrées.

On peut donc moduler aisément l'amplitude et la direction de l'effort vibratoire résultant à fournier en fonction des vibrations à réduire, en déphasant lesdites masselottes excentrées, alors que sa fréquence est commandée par le régime de rotation du moteur unique.

De plus, comme le moteur du système d'entraînement est unique, les rotors ont tous le même régime de rotation, imposé par le moteur unique. L'effort vibratoire résultant est en conséquence très stable et parfaitement maîtrisé. En outre, en cas de rupture du lien sans fin ou d'une panne du moteur unique, les quatre rotors s'arrêtent simultanément, de sorte que le niveau vibratoire de la structure va alors remonter jusqu'à sa valeur initiale sans dispositif antivibratoire mais ne pourra la dépasser, contrairement aux dispositifs antérieurs décrits préalablement.

Par ailleurs, le déphasage final obtenu après l'arrêt de l'équipement mobile dépend de la durée de déplacement dudit équipement, c'est-à-dire de son déplacement effectif le long de l'axe de symétrie. Avantageusement, le déphasage entre les rotors à masselottes excentrées symétriquement en vis-à-vis par rapport à l'axe de symétrie, est alors égal à la relation $2\dfrac{d}{r}$, où

$d$ correspond au déplacement linéaire dudit équipement mobile le long dudit axe de symétrie et $r$ correspond au rayon d'enroulement identique du lien sans fin autour du centre desdits rotors.

En particulier, la course du déplacement linéaire dudit équipement mobile est délimitée par deux positions extrêmes, une première position pour laquelle le déphasage entre les rotors à masselottes du premier ensemble et ceux du second ensemble est nul, et une seconde position pour laquelle le déphasage est égal à 180°.

L'effort vibratoire résultant peut ainsi varier d'une amplitude maximale, quand le déphasage entre les rotors à masselottes du premier ensemble et ceux du second ensemble est nul, à une amplitude nulle, quand le déphasage entre ceux-ci est de 180°, la fréquence dudit effort vibratoire étant égale au régime de rotation commun des rotors entraînés par le moteur unique.

Par ailleurs, le dispositif comporte de préférence au moins un servomoteur pour asservir la position dudit équipement mobile, une pluralité de capteurs mesurant la position desdits rotors pour calculer le déphasage entre lesdits ensembles et une loi de régulation et d'asservissement de la rotation dudit moteur unique.

Dans un mode préféré de réalisation, ledit équipement commandable est un chariot coulissant selon ledit axe de symétrie et supportant ledit moteur unique. De plus, ledit lien sans fin est une courroie et s'enroule autour de poulies, montées coaxialement sur lesdits rotors et sur ledit moteur unique, contenues dans un même plan. On remarque la simplicité de réalisation du système d'entraînement, sans asservissement, constitué d'un unique moteur entraînant une courroie et des poulies, lui assurant ainsi une fiabilité élevée et une maintenance réduite.

Pour éviter l'apparition de glissement entre le lien et les rotors, ladite courroie est crantée et coopère avec des dentures correspondantes ménagées sur lesdites poulies.

Par ailleurs, ledit équipement mobile commandable comporte également au moins un galet de mise sous tension dudit lien sans fin.

Dans un mode préféré de réalisation, les deux ensembles de deux rotors sont portés par un bâti pouvant être fixé à une structure vibrante, ledit équipement mobile commandable étant monté de façon coulissante sur ledit bâti selon l'axe de symétrie des deux ensembles.

De plus, ledit dispositif anti-vibratoire comprend, pour chaque ensemble de rotors, un galet rotatif intermédiaire coopérant avec ledit lien pour assurer l'entraînement contrarotatif des deux rotors, les deux galets rotatifs étant agencés sur le bâti et disposés respectivement de part et d'autre dudit axe de symétrie.

Les figures du dessin annexé feront bien comprendre comment l'invention peut être réalisée. Sur ces figures, des références identiques désignent des éléments semblables.

La figure 1 représente, en perspective, un exemple de réalisation du dispositif antivibratoire conforme à l'invention.

Les figures 2 à 6 représentent schématiquement différentes positions pouvant être occupées par le dispositif antivibratoire par suite de l'action de l'équipement mobile et du système d'entraînement, pour réduire les vibrations.

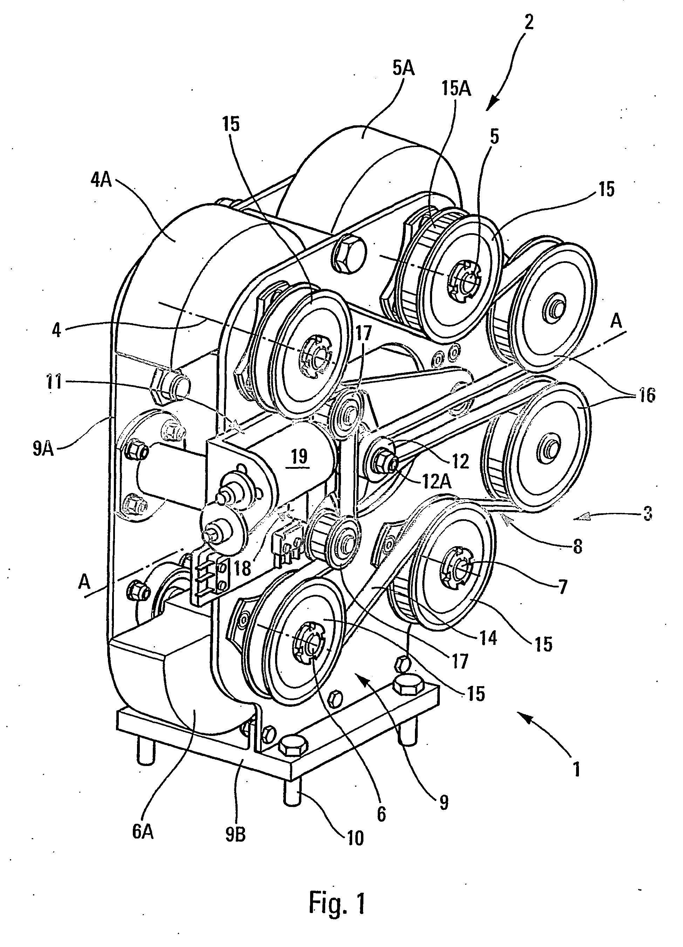

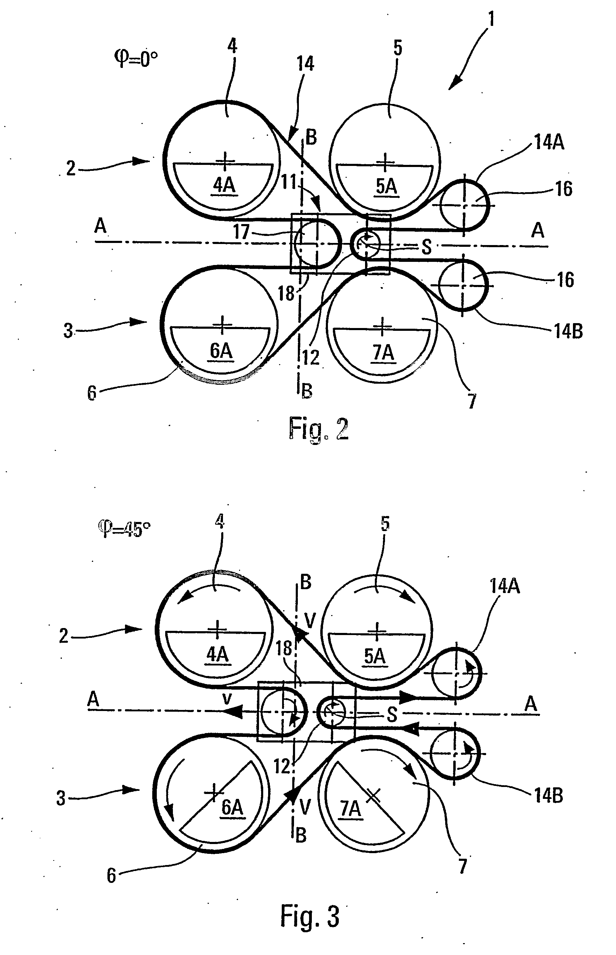

Le dispositif antivibratoire 1 illustré sur la figure 1 comprend deux ensembles ou modules identiques 2, 3 de deux rotors ou arbres rotatifs chacun, respectivement 4, 5 et 6, 7, auxquels sont associées des masselottes respectives 4A, 5A et 6A, 7A excentrées par rapport aux axes de rotation des rotors. Dans cet exemple de réalisation, les deux ensembles 2, 3 sont disposés dans un plan commun vertical et sont séparés l'un de l'autre par rapport à un axe de symétrie A, alors horizontal. Les axes des rotors 4, 5, 6 et 7 sont parallèles entre eux (horizontaux dans ledit exemple) et orthogonaux à l'axe de symétrie A des ensembles identiques 2, 3 de sorte que les rotors sont opposés deux à deux, les rotors 4, 5 et 6, 7 étant équidistants d'un axe de symétrie B (vertical sur les figures 2 à 8) orthogonal à l'axe de symétrie A.

Un système d'entraînement 8 assure par ailleurs l'entraînement des rotors 4 à 7.

En outre, les rotors desdits ensembles sont portés, via des paliers non représentés, par un bâti 9 constitué d'un assemblage de plaques 9A et dont la base 9B peut être fixée, par des organes de fixation 10, à une structure vibrante de l'hélicoptère, non représentée.

Selon l'invention, pour entraîner le déphasage des rotors à masselottes excentrées et ainsi moduler l'amplitude de l'effort vibratoire résultant en fonction des vibrations à "traiter", le dispositif 1 comprend un équipement mobile 11 portant le système d'entraînement 8 et pouvant coulisser le long de l'axe de symétrie A, le système d'entraînement 8 étant commun à l'ensemble des rotors, et les deux rotors 4, 5 et 6, 7 de chaque ensemble tournant de façon contrarotative l'un par rapport à l'autre, de sorte que les deux rotors 4-6 symétriquement en vis-à-vis tournent dans le même sens et les deux autres rotors 5-7 dans le sens contraire.

En particulier, le système d'entraînement commun 8 se compose d'un moteur unique 12 disposé entre les deux ensembles et dont l'axe de rotation de son arbre de sortie 12A est parallèle aux rotors 4, 5, 6, 7 et perpendiculaire à l'axe de symétrie A. le moteur unique 12 entraîne un lien sans fin 14 formant une boucle fermée et passant autour des rotors pour leur mise en mouvement. Dans ce mode de réalisation, le lien sans fin 14 est constitué par une courroie qui s'enroule autour de poulies 15 montées coaxialement sur les rotors. Les poulies ont un diamètre identique de sorte que, par rapport à l'axe de symétrie du dispositif, la longueur du brin 14A de la courroie 14 passant dans l'ensemble 2 est égale à la longueur du brin 14B passant dans l'ensemble 3.

Bien évidemment, les poulies 15 sont contenues dans un même plan vertical. Pour éviter l'apparition d'un roulement avec glissement, la courroie 14 est crantée et coopère alors avec des dentures correspondantes 15A ménagées à la périphérie des poulies 15. En variante, on pourrait utiliser un entraînement par chaîne et pignons.

Comme le montre la figure 1, la courroie crantée 14 s'enroule également autour de deux galets intermédiaires 16 tels que des poulies libres, identiques aux précédentes, respectivement disposés de part et d'autre de l'axe de symétrie A. Ces deux poulies intermédiaires 16 sont ainsi situées entre le moteur unique 12 et les ensembles respectifs 2, 3 et sont supportées par le bâti 9. Et chacune d'elles, en liaison avec son ensemble ou module concerné, permet aux deux rotors 4,5-6,7 d'un ensemble, via les poulies associées, de tourner en sens inverses l'un par rapport à l'autre. De plus, l'équipement mobile commandable 11 comporte deux galets, ou poulies, de mise sous tension identiques 17 agencés symétriquement l'un de l'autre par rapport à l'axe de symétrie A, pour permettre le réglage de la tension de la courroie 14.

En ce qui concerne l'équipement mobile commandable 11, il est composé, dans le mode de réalisation illustré, d'un chariot 18 agencé entre les deux ensembles 2, 3 et pouvant coulisser, dans le plan vertical du dispositif, le long de l'axe de symétrie A. Ce chariot 18 est structurellement lié de façon coulissante au bâti par une liaison de type glissière ou analogue non représentée, et porte les galets de mise sous tension 17 ainsi que le moteur unique 12 qui entraîne la courroie 14. De préférence, le déplacement du chariot selon l'axe de symétrie A est commandé par l'intermédiaire d'un servomoteur 19 prévu entre le bâti 9 et le chariot 18 et faisant partie d'un dispositif de contrôle de la fréquence et de l'amplitude de l'effort vibratoire global engendré par le dispositif antivibratoire 1. Ce dispositif de contrôle est constitué du servomoteur 19 asservissant la position du chariot 18 en fonction d'un premier signal électrique par exemple pour commander l'amplitude de l'effort vibratoire engendré par le dispositif 1, d'une pluralité de capteurs non représentés mesurant la position angulaire des rotors de chaque ensemble 2, 3 pour calculer le déphasage à produire entre les ensemble selon les vibrations à absorber, et d'une loi de régulation et d'asservissement de la vitesse de rotation du moteur unique 12 en fonction d'un second signal pour commander la fréquence.

Dans l'exemple illustré, le déphasage entre les rotors 4,6-5,7 à masselottes excentrées 4A, 6A-5A, 7A des deux ensembles, symétriquement en vis-à-vis par rapport à l'axe de symétrie A est donné par la relation

$$\varphi = 2\,\frac{d}{r},$$ où φ est le déphasage, d correspond au déplacement linéaire (course) du chariot le long de l'axe de symétrie et r correspond au rayon d'enroulement identique du lien sans fin autour du centre des rotors identiques.

Le fonctionnement du dispositif antivibratoire 1 et, en particulier, du système d'entraînement 8 et de l'équipement mobile 11 sera maintenant décrit en regard des figures 2 à 6.

Tout d'abord, on précise que, sur ces figures, seul un galet ou poulie de mise sous tension 17 de la courroie 14 est représenté, lequel est alors disposé suivant l'axe de symétrie A et lié à l'équipement mobile 11. Le chariot 18 de ce dernier est symbolisé par un rectangle. Et on suppose que le moteur unique 12 du système d'entraînement 8 tourne dans le sens S indiqué sur la figure 2, de sorte que la courroie 14 s'enroule autour des poulies libres 16 dans le sens senestrorsum. Le déphasage entre les rotors en vis-à-vis des ensembles est nul, les quatre masselottes excentrées 4A, 5A, 6A, 7A des rotors étant dans la même position angulaire, et dans cet exemple, le chariot 18 occupe alors l'une de ses deux positions limites de fin de course, à droite sur la figure 2.

Lorsqu le moteur unique 12 tourne (à régime constant en fonctionnement nominal), les deux brins de la courroie 14 respectivement supérieur 14A (au-dessus de l'axe de symétrie A) et inférieur 14B (au-dessous de l'axe de symétrie A) sont animés de vitesses de même module V mais de sens opposés.

Les rotors 4-5, 6-7 de chaque ensemble 2, 3 sont animés d'une vitesse identique et tournent dans leur ensemble en sens opposé l'un de l'autre, mais dans des sens identiques pour les paires de rotors des ensembles, disposés symétriquement par rapport à l'axe A, c'est-à-dire les paires de rotors 4-6 et 5-7.

Pour obtenir par exemple un déphasage φ de 45° fourni par les capteurs entre les deux paires en vis-à-vis de rotors, le chariot 18 de l'équipement mobile 11 se déplace à une vitesse v vers la gauche sous l'action du servomoteur 19, comme le montre la figure 3, selon l'axe de symétrie A et imprime son mouvement de translation aux deux brins 14A, 14B de la courroie 14. Sa tension reste constante, donc identique, car la longueur de son parcours est inchangée (le déplacement du moteur unique compense celui du chariot). Les vitesses des brins respectives deviennent, pour le brin supérieur 14A, égale à V-v puisqu'il est tiré par le coulissement du chariot 18 et, pour le brin inférieur 14B, égale à V+v puisqu'il est poussé par ledit chariot.

Ainsi, comme les deux, rotors 4-5 de l'ensemble 2 sont animés d'une vitesse différente de celle des rotors 6-7 de l'ensemble 3, il s'ensuit un déphasage progressif des masselottes excentrées 4A, 5A, 6A, 7A et, donc, un effort résultant vibratoire d'intensité et de direction du dispositif 1 déterminées correspondant aux vibrations à vaincre de la structure.

En particulier, dans le présent exemple, lorsque les deux rotors 4-5 de l'ensemble supérieur 2 sont dans la même position de référence que sur la figure 2 (leurs masselottes excentrées 4A et 5A étant toujours symétriques l'une de l'autre par rapport à l'axe B vertical sur les figures), les deux rotors 6-7 de l'ensemble inférieur 3 ont tourné de 45° supplémentaires, du fait de la différence de vitesse V+v et V-v (leurs masselottes excentrées 4B et5B étant toujours symétriques l'une de l'autre par rapport à l'axe B vertical).

Le déphasage φ de 45° obtenu entre la paire 4,6 et la paire 5,7 des rotors symétriques par rapport à l'axe A, et donc des masselottes excentrées, fournit l'amplitude et la direction de l'effort vibratoire résultant du dispositif 1, tandis que sa fréquence est fonction de la vitesse de rotation du moteur unique 12.

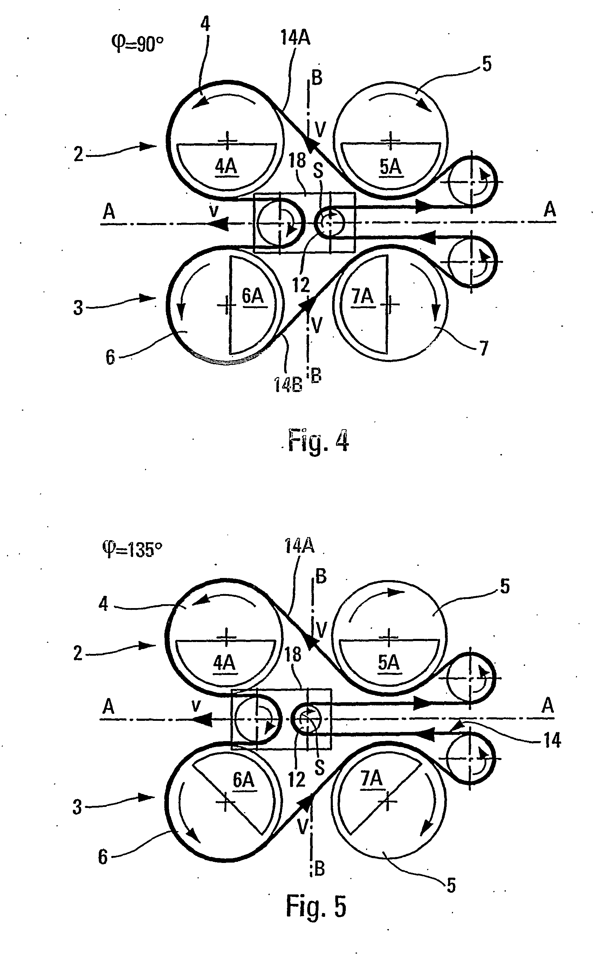

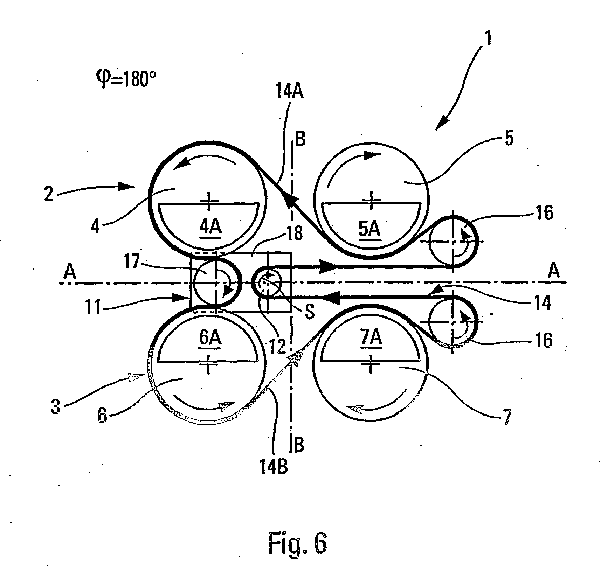

Les figures 4 à 6 montrent des exemples de déphasages remarquables du dispositif antivibratoire 1 respectivement égaux à 90°, 135° et 180° à la suite du déplacement vers la gauche, selon l'axe A, du chariot, le dernier déphasage de 180° correspondant à l'autre position limite de fin de course du chariot, à gauche sur la figure 6. On ne décrira pas davantage le fonctionnement des rotors à masselottes excentrées des ensembles 2, 3 pour atteindre ces différents déphasages, fonctionnement qui découle de manière évidente des figures. Bien évidemment, toute autre valeur de déphasage entre 0° et 180° peut être obtenue, seules des valeurs de déphasage remarquables ayant été illustrées.

On comprend donc que, grâce au dispositif 1 de l'invention, tout effort vibratoire résultant (amplitude et orientation) peut être délivré entre les deux valeurs extrêmes du déphasage (0 à 180°) correspondant aux deux courses limites du chariot, c'est-à-dire compris entre un effort vibratoire nul quand l'influence des masselottes excentrées s'annule et un effort maximal quand l'influence des quatre masselottes excentrées s'ajoute.

En variante, le dispositif de contrôle peut estimer le déphasage des ensembles ou modules à partir de la position effective du chariot (et non à partir des capteurs associés aux rotors) puisqu'à une position du chariot selon l'axe A correspond un déphasage φ. Un étalonnage préalable liant la course du chariot au déphasage des ensembles est alors nécessaire.

De même, bien que les asservissements décrits soient du type électrique, on pourrait envisager, en fonction de contraintes particulières d'application, des asservissements de type mécanique, fluidique, optique ou autre.

Par ailleurs, si le dispositif antivibratoire est utilisé seul avec un niveau d'effort vibratoire prédéterminé, on peut alors simplifier le dispositif de commande du chariot en remplaçant le servomoteur par une liaison de type vis-écrou pour le réglage du chariot selon l'axe, et par un contre-écrou pour le blocage.

L'orientation de l'effort vibratoire élémentaire de chaque ensemble peut être réglée en décalant la position des centres de gravité des deux rotors à masselottes excentrées. Si les efforts élémentaires des deux ensembles ont la même orientation, alors l'effort vibratoire résultant global du dispositif avec cette orientation est une amplitude qui dépendra du déphasage entre les ensembles. Un tel décalage des balourds engendrés par les masselottes peut être obtenu manuellement par un réglage prédéterminé de la position des masselottes ou automatiquement par un asservissement spécifique.

**Revendications**

1. Dispositif antivibratoire du type comportant au moins deux ensembles (2, 3) de deux rotors identiques chacun (4, 5-6, 7), à masselottes excentrées respectives (4A, 5A - 6A, 7A), lesdits ensembles étant disposés symétriquement par rapport à un axe de symétrie et les axes de rotation desdits rotors étant parallèles entre eux et orthogonaux audit axe de symétrie, un système d'entraînement (8) en rotation desdits rotors,
**caractérisé :**

   - **en ce qu**'il comprend un équipement mobile commandable (11) portant ledit système d'entraînement (8) et pouvant coulisser le long dudit axe de symétrie pour entraîner le déphasage des rotors à masselottes excentrées des ensembles ; et
   - en ce que ledit système d'entraînement (8) comporte un moteur unique (12) pour la rotation desdits rotors, à axe agencé perpendiculairement audit axe de symétrie, qui entraîne un lien sans fin passant autour desdits rotors (4, 5-6, 7), de sorte que les longueurs des brins du lien passant dans lesdits ensembles sont égales.

2. Dispositif selon la revendication 1,
**caractérisé en ce que** ledit moteur unique (12) est disposé entre lesdits deux ensembles (2,3).

3. Dispositif selon l'une des revendications 1 à 2,
**caractérisé en ce que** le déphasage φ entre les rotors à masselottes excentrées symétriquement en vis-à-vis (4,6 - 5,7) par rapport à l'axe de symétrie, est égal à la relation $2\dfrac{d}{r}$, où $\underline{d}$ correspond au déplacement linéaire dudit équipement mobile (11) le long dudit axe de symétrie et $\underline{r}$ correspond au rayon d'enroulement identique du lien sans fin autour du centre desdits rotors.

4. Dispositif selon l'une des revendications 1 à 3,
**caractérisé en ce que** la course du déplacement linéaire dudit équipement mobile (11) est délimitée par deux positions extrêmes, une première position pour laquelle le déphasage entre les rotors à masselottes excentrées est nul, et une seconde position pour laquelle le déphasage est égal à 180°.

5. Dispositif selon l'une des revendications 1 à 4,
**caractérisé en ce qu'**il comporte au moins un servomoteur (19) pour asservir la position dudit équipement mobile (11), une pluralité de capteurs mesurant la position desdits rotors pour le calcul du déphasage entre lesdits ensembles et une loi de régulation et d'asservissement de la rotation dudit moteur unique.

6. Dispositif selon l'une des revendications 1 à 5,
**caractérisé en ce que** ledit équipement mobile commandable (11) est un chariot (18) coulissant selon ledit axe de symétrie et supportant ledit moteur unique (12).

7. Dispositif selon l'une des revendications précédentes 1 à 6,
**caractérisé en ce que** ledit lien sans fin (14) est une courroie et s'enroule autour de poulies (15), montées coaxialement sur lesdits rotors et sur ledit moteur unique, contenues dans un même plan.

8. Dispositif selon la revendication précédente,
**caractérisé en ce que** ladite courroie (14) est crantée et coopère avec des dentures correspondantes (15A) ménagées sur lesdites poulies (15).

9. Dispositif selon l'une des revendications précédentes 1 à 8,
**caractérisé en ce que** ledit équipement mobile commandable (11) comporte également au moins un galet de mise sous tension (17) dudit lien sans fin (14).

10. Dispositif selon l'une quelconque des revendications 1 à 9,
**caractérisé en ce que** les deux ensembles (2, 3) sont portés par un bâti (9) pouvant être fixé à une structure vibrante, ledit équipement mobile commandable(11) étant monté de façon coulissante sur ledit bâti (9) selon l'axe de symétrie des deux ensembles (2,3).

11. Dispositif selon l'une des revendications précédentes 1 à 10,
**caractérisé en ce qu'**il comprend, pour chaque ensemble (2, 3) de rotors, un galet rotatif intermédiaire (16) coopérant avec ledit lien (14) pour assurer l'entraînement contrarotatif des deux rotors, les deux galets rotatifs (16) étant agencés sur ledit bâti (9) et disposés respectivement de part et d'autre dudit axe de symétrie.

**Claims**

1. Antivibration device of the type comprising at least two sets (2, 3) of two identical rotors each (4, 5-6, 7), having respective eccentric flyweights (4A, 5A - 6A, 7A), said sets being disposed symmetrically with respect to an axis of symmetry, and the axes of rotation of said rotors being parallel to one another and orthogonal to said axis of symmetry, and a drive system (8) for rotating said rotors, **characterized:**

   - **in that** it comprises controllable moving equipment (11) carrying said drive system (8) and capable of sliding along said axis of symmetry to bring about the phase shift of the eccentric-flyweight rotors of the sets; and
   - **in that** said drive system (8) comprises a single motor (12) for rotating said rotors, having its axis arranged perpendicularly to said axis of symmetry, and driving an endless link passing around said rotors (4, 5-6, 7), so that the lengths of the strands of the link passing through said sets are equal.

2. Device according to Claim 1, **characterized in that** said single motor (12) is disposed between said two sets (2, 3).

3. Device according to one of Claims 1 to 2, **characterized in that** the phase shift φ between the eccentric-flyweight rotors disposed symmetrically facing each other (4, 6 - 5, 7) with respect to the axis of symmetry is equal to the relationship $2\dfrac{d}{r}$, where d corresponds to the linear displacement of said moving equipment (11) along said axis of symmetry, and r corresponds to the identical winding radius of the endless link about the centres of said rotors.

4. Device according to one of Claims 1 to 3, **characterized in that** the linear displacement stroke of said moving equipment (11) is delimited by two extreme positions, a first position in which the phase shift between the eccentric-flyweight rotors is zero, and a second position in which the phase shift is equal to 180°.

5. Device according to one of Claims 1 to 4, **characterized in that** it comprises at least one servomotor (19) for servo-controlling the position of said moving equipment (11), a plurality of sensors measuring the position of said rotors for the purpose of calculating the phase shift between said sets, and a law for regulating and servo-controlling the rotation of said single motor.

6. Device according to one of Claims 1 to 5, **characterized in that** said controllable moving equipment (11) is a carriage (18) sliding along said axis of symmetry and supporting said single motor (12).

7. Device according to one of the preceding Claims 1 to 6, **characterized in that** said endless link (14) is a belt and winds around pulleys (15) mounted coaxially on said rotors and on said single motor, which pulleys are contained in a common plane.

8. Device according to the preceding claim, **characterized in that** said belt (14) is a notched belt and co-operates with corresponding teeth (15A) formed on said pulleys (15).

9. Device according to one of the preceding Claims 1 to 8, **characterized in that** said controllable moving equipment (11) also comprises at least one tensioning roller (17) for tensioning said endless link (14).

10. Device according to any one of Claims 1 to 9, **characterized in that** the two sets (2, 3) are carried by a frame (9) suitable for being secured to a vibrating structure, said controllable moving equipment (11) being slidably mounted on said frame (9) to slide along the axis of symmetry of the two sets (2, 3).

11. Device according to one of the preceding Claims 1 to 10, **characterized in that** for each set (2, 3) of rotors, it comprises an intermediate rotary roller (16) co-operating with said link (14) to ensure that the two rotors are driven in contrarotation, the two rotary rollers (16) being arranged on said frame (9) and being disposed respectively on either side of said axis of symmetry.

**Patentansprüche**

1. Schwingungsdämpfende Vorrichtung von der Art, die mindestens zwei Gruppen (2, 3) von zwei gleichen Rotoren (4, 5 - 6, 7), jeder von ihnen mit exzentrischen Fliehgewichten (4A, 5A - 6A, 7A), wobei die Gruppen bezüglich einer Symmetrieachse symmetrisch angeordnet und die Drehachsen der Rotoren parallel zueinander und orthogonal zur Symmetrieachse sind, und ein Drehantriebssystem (8) der Rotoren aufweist, **dadurch gekennzeichnet:**

   - **dass** sie eine steuerbare bewegliche Einrichtung (11) aufweist, die das Antriebssystem (8) trägt und entlang der Symmetrieachse gleiten kann, um die Phasenverschiebung der Rotoren mit exzentrischen Fliehgewichten der Gruppen zu bewirken; und

- **dass** das Antriebssystem (8) einen einzigen Motor (12) zur Drehung der Rotoren mit einer Achse lotrecht zur Symmetrieachse aufweist, der ein um die Rotoren (4, 5-6, 7) verlaufendes Endlosband derart antreibt, dass die Längen der durch die Gruppen verlaufenden Trums des Bands gleich sind.

2. Vorrichtung nach Anspruch 1, **dadurch gekennzeichnet, dass** der einzige Motor (12) zwischen den zwei Gruppen (2, 3) angeordnet ist.

3. Vorrichtung nach einem der Ansprüche 1 bis 2, **dadurch gekennzeichnet, dass** die Phasenverschiebung φ zwischen den bezüglich der Symmetrieachse einander symmetrisch gegenüberliegenden Rotoren (4, 6 - 5, 7) mit exzentrischen Fliehgewichten gleich der Beziehung $2\dfrac{d}{r}$ ist, wobei <u>d</u> der linearen Verschiebung der beweglichen Einrichtung (11) entlang der Symmetrieachse und <u>r</u> dem gleichen Aufwickelradius des Endlosbands um die Mitte der Rotoren entspricht.

4. Vorrichtung nach einem der Ansprüche 1 bis 3, **dadurch gekennzeichnet, dass** der Hub der linearen Verschiebung der beweglichen Einrichtung (11) von zwei Endstellungen begrenzt wird, einer ersten Stellung, in der die Phasenverschiebung zwischen den Rotoren mit exzentrischen Fliehgewichten Null ist, und einer zweiten Stellung, in der die Phasenverschiebung gleich 180° ist.

5. Vorrichtung nach einem der Ansprüche 1 bis 4, **dadurch gekennzeichnet, dass** sie mindestens einen Servomotor (19), um die Stellung der beweglichen Einrichtung (11) zu regeln, mehrere Sensoren, die die Stellung der Rotoren für die Berechnung der Phasenverschiebung zwischen den Gruppen messen, und ein Regulierungs- und Nachführungsgesetz der Drehung des einzigen Motors aufweist.

6. Vorrichtung nach einem der Ansprüche 1 bis 5, **dadurch gekennzeichnet, dass** die steuerbare bewegliche Einrichtung (11) ein Wagen (18) ist, der gemäß der Symmetrieachse gleitet und den einzigen Motor (12) trägt.

7. Vorrichtung nach einem der vorhergehenden Ansprüche 1 bis 6, **dadurch gekennzeichnet, dass** das Endlosband (14) ein Riemen ist und sich um Riemenscheiben (15) wickelt, die koaxial auf die Rotoren und den einzigen Motor montiert sind und in einer gleichen Ebene enthalten sind.

8. Vorrichtung nach dem vorhergehenden Anspruch, **dadurch gekennzeichnet, dass** der Riemen (14) ein Zahnriemen ist und mit entsprechenden Zahnungen (15A) zusammenwirkt, die auf den Riemenscheiben (15) vorgesehen sind.

9. Vorrichtung nach einem der vorhergehenden Ansprüche 1 bis 8, **dadurch gekennzeichnet, dass** die steuerbare bewegliche Einrichtung (11) mindestens eine Rolle (17) zum Spannen des Endlosbands (14) aufweist.

10. Vorrichtung nach einem der Ansprüche 1 bis 9, **dadurch gekennzeichnet, dass** die zwei Gruppen (2, 3) von einem Gestell (9) getragen werden, das an einer vibrierenden Struktur befestigt sein kann, wobei die steuerbare bewegliche Einrichtung (11) auf dem Gestell (9) gemäß der Symmetrieachse der zwei Gruppen (2, 3) gleitend montiert ist.

11. Vorrichtung nach einem der Ansprüche 1 bis 10, **dadurch gekennzeichnet, dass** sie für jede Gruppe (2, 3) von Rotoren eine drehbare Zwischenrolle (16) aufweist, die mit dem Band (14) zusammenwirkt, um den Antrieb der zwei Rotoren in Gegendrehrichtung zu gewährleisten, wobei die zwei drehbaren Rollen (16) auf dem Gestell (9) gelagert und zu beiden Seiten der Symmetrieachse angeordnet sind.

Fig. 1

Fig. 2

Fig. 3

Fig. 4

Fig. 5

Fig. 6

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2770825
- US 6067853 A
- US 5903077 A
- EP O337040 A